# EUROPÄISCHE PATENTANMELDUNG

(11) **EP 0 548 041 A2**
(43) Veröffentlichungstag der Anmeldung: **23.06.1993**
(21) Anmeldenummer: 92890243.6
(22) Anmeldetag: 16.11.1992
(51) Int. Cl.: F27B 1/02, C21C 5/56, C21C 5/52, F27B 19/02, F27B 3/19

(54) **Elektro-Lichtbogenofen zur Herstellung von Stahl**

(30) Priorität: 18.11.1991 AT 2282/91; 16.12.1991 AT 2490/91
(71) Anmelder: VOEST-ALPINE INDUSTRIEANLAGENBAU GMBH, A-4020 Linz (AT)
(72) Erfinder: Berger, Harald, Dr. Dipl.-Ing., A-4020 Linz (AT); Mittag, Peter, Dipl.-Ing., A-4020 Linz (AT); Steins, Johannes, Dipl.-Ing., A-4210 Gallneukirchen (AT); Pfeiffer, Gert, Dipl.-Ing., A-4060 Leonding (AT)
(74) Vertreter: Kopecky, Helmut

(57) **Zusammenfassung**

Bei einem Elektro-Lichtbogenofen zur Herstellung von Stahl durch Einschmelzen von Schrott (27), insbesondere Eisenschrott, und/oder Eisenschwamm und/oder Roheisen sowie Zuschlagstoffen, in einem Ofengefäß (1), ragt in das Ofengefäß mindestens eine in ihrer Längsrichtung verbringbare Graphitelektrode (11), wobei ein Lichtbogen (26) zwischen der Graphitelektrode (11) und dem Chargiergut (27) gezündet ist.

Zur Erzielung eines besonders hohen Energieeintrages
- ragt die Graphitelektrode (11) in einen Unterteil (8) des Ofengefäßes (1) von der Seite her hinein und
- weist der Unterteil (8) im Bereich der Graphitelektrode (11) eine radial gegenüber dem Oberteil (10) nach außen vorspringende Erweiterung (8, 9) auf (Fig. 1).

## Beschreibung

Die Erfindung betrifft einen Elektro-Lichtbogenofen zur Herstellung von Stahl durch Einschmelzen von Schrott, insbesondere Eisenschrott, und/oder Eisenschwamm und/oder Roheisen sowie Zuschlagstoffen, in einem Ofengefäß, in das mindestens eine in ihrer Längsrichtung verbringbare Graphitelektrode ragt, wobei ein Lichtbogen zwischen der Graphitelektrode und dem Chargiergut gezündet ist.

Herkömmliche Gleichstrom-Lichtbogenöfen zum Einschmelzen von Schrott, die einen etwas höheren Energieeintrag ermöglichen, weisen eine einzige zentrische und senkrecht im Ofengefäß angeordnete Graphitelektrode auf. Dem möglichen Energieeintrag, der vom Sekundärstrom abhängig ist, sind durch den maximal möglichen Durchmesser der Graphitelektrode Grenzen gesetzt. Der maximale Energieeintrag ist derzeit bei Öfen dieser Art mit Elektroden, deren Durchmesser bei 700 mm liegt, möglich.

Elektrodendurchmesser in dieser Größenordnung und geplante größere bedingen jedoch wegen der auftretenden sehr großen Massen, Kräfte und Momente äußerst aufwendige konstruktive Lösungen und Nachteile beim Betrieb der Elektrodenklemmvorrichtung, des Elektrodentragarmes, der Elektrodenhubvorrichtung und ihrer Führung, den Hochstromseilen usw.

Außerdem bereitet es Schwierigkeiten, Elektroden so großen Durchmessers in ausreichender Qualität herzustellen. Darüber hinaus ist der Energieeintrag durch den einzigen Lichtbogen auf eine Stelle mehr oder weniger in der Ofenmitte konzentriert und wird noch durch magnetische Einflüsse, die bei hohen Leistungen auf den Lichtbogen wirken, erschwert.

Beim konventionellen Drehstrom-Lichtbogenofen, wie z.B. Gemäß DE-C - 29 44 269, FR-B - 2 218 397 und DE-A- 32 41 987, wird durch drei im Zentrum auf einem Teilkreis angeordnete Elektroden ein senkrechter Krater in den Schrott geschmolzen und hernach der übrige Schrott aufgelöst. Die Energie der heißen Abgase steigt durch den leeren Krater ungenützt nach oben und bewirkt eine erhöhte Deckelaufheizung und - wie auch bei konventionellen Gleichstrom-Lichtbogenöfen - eine große glühende Elektrodenlänge, die zu starkem seitlichem Abbrand führt. Außerdem sind für die Elektroden sehr massive Elektrodentragarme und Hubmaste mit schweren Führungen nötig, um die Kräfte und Vibrationen, die auch durch die gefahrenen hohen Ströme ausgelöst werden, zu beherrschen. Diese Einrichtungen sind ein wesentlicher Investitionskostenfaktor, der den konventionellen Drehstrom-Lichtbogenofen immer mehr verteuert und den Betrieb erschwert.

Weiters ist es aus der EP-B - 0 240 485 bekannt, zur Herstellung von Stahl aus Schrott bei einem Ofen mit einem Schacht mit angeschlossenem Herdofen als Beheizungseinrichtung mehrere Plasmabrenner vorzusehen, die gegenüber der Ofenachse schräg angeordnet sind und peripher von außen nach innen ragen. Plasmabrenner sind wegen ihrer Wolframkathode jedoch in ihrer Leistung begrenzt und zudem besteht ständig die Gefahr eines Wasserlecks.

Die Erfindung bezweckt die Vermeidung dieser Nachteile und Schwierigkeiten und stellt sich die Aufgabe, eine Anlage dereingangs beschriebenen Art zu schaffen, mit der ein besonders hoher Energieeintrag bei niedrigen Investitions-, Betriebs- und Instandhaltungskosten möglich ist und welche Einrichtung eine hohe Betriebssicherheit und Verfügbarkeit aufweist.

Diese Aufgabe wird erfindungsgemäß dadurch gelöst,
- daß die Graphitelektrode in einen Unterteil des Ofengefäßes von der Seite her hineinragt und
- daß der Unterteil im Bereich der Graphitelektrode eine radial gegenüber dem Oberteil nach außen vorspringende Erweiterung aufweist.

Beim erfindungsgemäßen Elektro-Lichtbogenofen brennt der Lichtbogen etwa in Verlängerung der Achse der Elektrode gegen das Chargiergut, wodurch der Lichtbogen eine Kaverne in den Schüttkegel aus Chargiergut brennt. In diese Kaverne stürzt das darüberliegende Chargiergut nach, um dann selbst dem Lichtbogen ausgesetzt zu sein und eingeschmolzen zu werden.

Dadurch, daß die Graphitelektrode von der Seite her in den gegenüber dem oberen Teil des Ofengefäßes radial erweiterten unteren Teil des Ofengefäßes hineinragt, ist die Graphitelektrode gegen das herabfallende Chargiergut gut geschützt. Lediglich zum Zünden des Lichtbogens bzw. zum Überhitzen des aus dem Schrott gebildeten Stahlbades nach völligem Einschmelzen des Schrottes wird die Graphitelektrode weiter nach vor verschoben. Während des Einschmelzens des Schrottes wird die Elektrodenspitze zweckmäßig außerhalb des Grundrisses des oberen Teiles des Ofengefäßes gehalten.

Die beim Einschmelzen entstehenden heißen Gase werden durch die Schrottsäule nach oben abgesaugt und erhitzen den Schrott. Die seitlich eindringenden Graphitelektroden selbst bleiben von diesen heißen Gasen größtenteils verschont, so daß die Graphitelektroden nur eine kurze glühende Elektrodenlänge sowie einen dementsprechend geringen seitlichen Abbrand aufweisen.

Eine Anlage zum Herstellen von geschmolzenem Metall aus Erzen ist aus der US-A - 1,542,562 bekannt. Diese Anlage weist einen einen oberen Teil des Ofengefäßes bildenden Schacht sowie einen gegenüber diesem radial erweiterten unteren Teil, in den Elektroden einmünden, sowie eine im Zentrum des Bodens des Ofengefäßes liegende kegelartige Erhebung auf, die dazu dient, die Erzgutsäule in eine relativ dünnwandige Mantelschicht aufzuteilen, um das Reduzieren und Aufschmelzen des Erzes zu ermöglichen.

Die gegen die Erzgutsäule ragenden Elektroden erhitzen das Erz entweder durch elektrischen Widerstand oder durch Strahlung eines jeweils zwischen zwei enger benachbarten und zueinander geneigt gerichteten Elektroden brennenden Lichtbogens. Bei dieser bekannten Anlage handelt es sich um einen Reduktionsofen mit sehr geringer Leistung, die durch den Verschleiß der kegelartigen Erhebung begrenzt wird. Außerdem ist eine metallurgische Arbeit in der Flüssigphase bei Energiezufuhr durch die schrägen Elektroden nicht möglich.

Die Erweiterung kann sich erfindungsgemäß nach einer Ausführungsform entweder ringförmig um den Oberteil erstrecken - wobei die Erweiterung nicht unbedingt einen geschlossenen Ring bilden muß, sondern bei der Asticheinrichtung unterbrochen sein kann - oder nach einer anderen bevorzugten Ausführungsform nur im Bereich der Einmündung der Graphitelektrode in den Unterteil erstrecken. Gemäß der zuletzt angeführten Ausführungsform bildet die Erweiterung eine sogenannte "Elektrodenkammer", in der die Elektrodenspitze zu liegen kommt, insbesondere beim Chargieren geschützt unterbringbar ist. Die Elektrodenkammer weist hierbei zweckmäßig eine sich in Umfangsrichtung des Unterteiles erstreckende Breite vom 3-bis 7-Fachen des Elektrodendurchmessers auf. Hierdurch wird eine effizientere Gasströmung durch die im Ofeninnenraum vorhandene Schrottsäule und auch ein optimaler Schutz der Graphitelektroden gewährleistet.

Gemäß einer bevorzugten Ausführungsform des erfindungsgemäßen Elektro-Lichtbogenofens sind die Graphitelektroden schräg abwärts gegen den Boden des Ofengefäßes gerichtet, wodurch es möglich ist, die Lichtbögen etwa senkrecht auf die Oberfläche des Chargiergutschüttkegels zu richten. Die schräge Anordnung der Elektroden ermöglicht auch nach vollkommenem Aufschmelzen des Schrottes eine effiziente Überhitzung der Schmelze sowie die Durchführung der im herkömmlichen Elektro-Lichtbogenofen praktizierten metallurgischen Operationen, wie Frischen, Desoxidieren, Legieren usw.

Der erfindungsgemäße Elektro-Lichtbogenofen läßt sich sowohl als Drehstromofen mit drei bzw. einer Mehrzahl von drei Graphitelektroden oder auch als Gleichstromofen mit einer Mehrzahl von Graphitelektroden ausbilden.

Ist der Elektro-Lichtbogenofen als Gleichstromofen ausgebildet, sind zweckmäßig die Graphitelektroden kathodisch geschaltet und ist im Boden des Ofengefäßes eine Bodenanode vorgesehen.

Es ist jedoch auch möglich, bei Ausbildung des Elektro-Lichtbogenofens als Gleichstromofen mindestens eine Graphitelektrode kathodisch und mindestens eine anodisch zu schalten. Bei dieser Ausbildung wird der bei herkömmlichen Elektro-Lichtbogenöfen mit anodisch geschalteter Graphitelektrode erhöhte Verschleiß derselben, der bis zum Dreifachen des Verschleißes der kathodisch geschalteten Graphitelektrode betragen kann, vermieden, da erfindungsgemäß die Graphitelektrode speziellen Kühlmaßnahmen unterworfen wird. Damit wird der Betrieb eines Gleichstrom-Lichtbogenofens teilweise oder gänzlich ohne Bodenanode und damit ohne flüssigen Sumpf möglich.

Zweckäßig sind die Graphitelektroden voneinander unabhängig elektrisch geschaltet und ist die Anordnung der Graphitelektroden so, daß ein Austausch einer Graphitelektrode bzw. ein nachsetzen unabhängig vom Betrieb der anderen Graphitelektroden vor sich gehen kann, wodurch ein kontinuierlicher Betrieb des Elektro-Lichtbogenofens ohne Unterbrechung der Stromzufuhr zu den anderen Graphitelektroden möglich ist. Dadurch wird die Verfügbarkeit des Elektro-Lichtbogenofens wesentlich erhöht.

Vorzugsweise sind die Graphitelektroden etwa in einem Niveau und etwa radialsymmetrisch zur Vertikalachse des Ofengefäßes angeordnet.

Gemäß einer bevorzugten Ausführungsform ragen in mindestens einem Niveau oberhalb des Niveaus, in dem die Graphitelektroden angeordnet sind, Gas-Sauerstoff-Brennerlanzen zum Eintrag fossiler Energie und zum Einbringen von Sauerstoff von der Seite her in das Ofengefäß, wobei zweckäßig die Gas-Sauerstoff-Brennerlanzen radialsymmetrisch zur Vertikalachse des Ofengefäßes und bei Sicht in Richtung dieser Vertikalachse zwischen den Graphitelektroden liegend angeordnet sind.

Zur Ermöglichung eines besonders effizienten Einschmelzens sind zweckmäßig die Graphitelektroden in schräger Richtung auf einer Elektrodenstützeinrichtung angeordnet, an der sie axial verschiebbar sowie um eine etwa vertikale und eine etwa horizontale Achse schwenkbar gelagert sind. Hierdurch gelingt es, auch bei einseitigem Schrottchargieren stets einen optimal wirkenden Lichtbogen zu erzeugen.

Die Abstützung der Elektroden kann erfindungsgemäß mit leichten und kostengünstigen Konstruktionen bewerkstelligt werden. Vorzugsweise ist die Graphitelektrode mittels Stützrollen in Richtung ihrer Längsachse an der Elektrodenstützeinrichtung bewegbar abgestützt.

Um die Schmelze aus dem Elektro-Lichtbogenofen durch Kippen ausfließen zu lassen, ist vorteilhaft die Elektrodenstützeinrichtung in zum Ofengefäß radialer Richtung zum Ofengefäß hin und entgegengesetzt fahrbar.

Gemäß einer bevorzugten Ausführungsform sind die Graphitelektroden als Hohlelektroden ausgebildet, deren Hohlraum an eine Gaszuführungsleitung sowie gegebenenfalls an eine Feststoffzuführungsleitung zum Einbringen metall-und/oder metalloxidhältiger Stäube und/oder organischer Substanzen anschließbar ist.

Eine weitere bevorzugte Ausführungsform ist dadurch gekennzeichnet, daß der Elektroofen als Schachtofen ausgebildet ist, wobei der Schacht am oberen Ende mit einer oder mehreren verschließbaren Seiten-Chargieröffnung(en) versehen ist, wodurch ein Deckelhub- und -schwenkwerk sowie eine Unterbrechung des Einschmelzens durch Entfernen des bei herkömmlichen Elektro-Lichtbogenöfen vorhandenen Deckels und der von oben vertikal durch den Deckel in das Innere des Ofengefäßes ragenden Elektroden entfällt. Weiters ist auch die Gefahr des Flüssigstahlauswurfes beim Chargieren in den Flüssigsumpf ausgeschaltet. Darüber hinaus muß während des Chargiervorganges der Schmelzprozeß nicht unterbrochen werden, wodurch sich die Verfügbarkeit erhöht.

Weitere bevorzugte Ausführungsformen ergeben sich aus den Unteransprüchen.

Ein Verfahren zur Herstellung von Stahl aus Schrott unter Verwendung einer erfindungsgemäßen Anlage, bei dem ein hoher Einergieeintrag mit geringen Kosten möglich ist, ist dadurch gekennzeichnet, daß nach Chargieren des Schrotts und Zünden der Lichtbögen durch die Hohlräume der Elektroden Brenngas, vorzugsweise Erdgas, unter Kühlung der Elektrodenspitzen dem Lichtbogen zugeführt und dort zerlegt wird, wobei vorteilhaft ein durch Zuführung von Erdgas im Lichtbogen enstehendes Gasgemisch (CO + H₂) aufsteigen gelassen wird und in einem Niveau oberhalb der durch den Lichtbogen eingebrannten Kavernen unter Abgabe von Wärme an den Schrott nachverbrannt wird.

Zweckmäßig wird die Nachverbrennung des Gasgemisches (CO + H₂) mit Hilfe einer Verbrennung eines Brenngas-Sauerstoff-Gemisches durchgeführt.

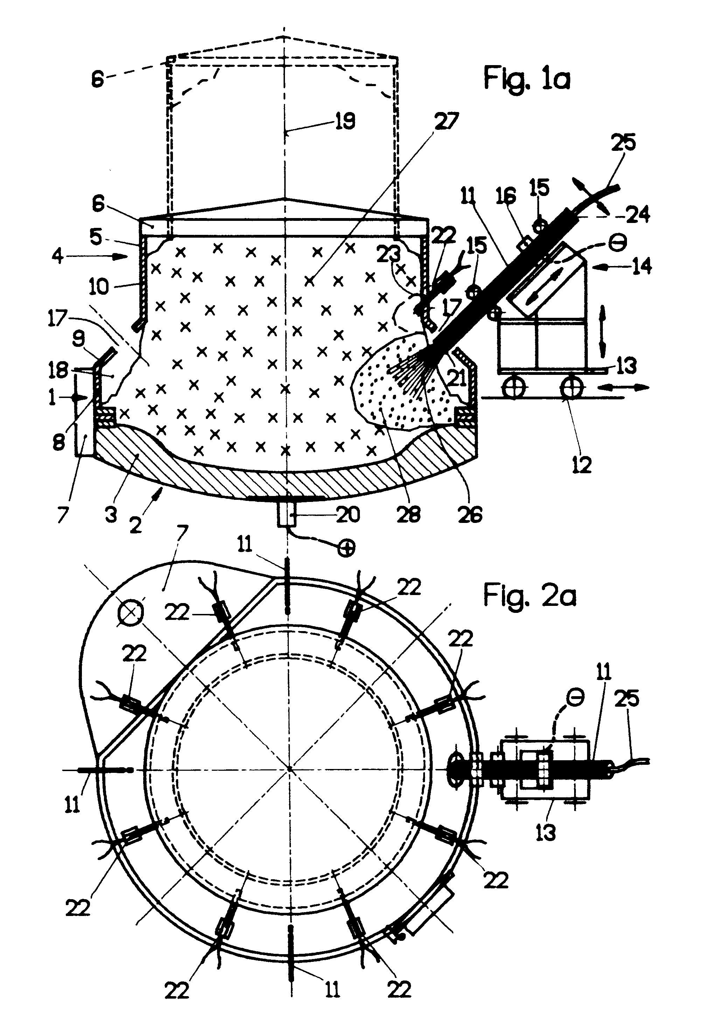

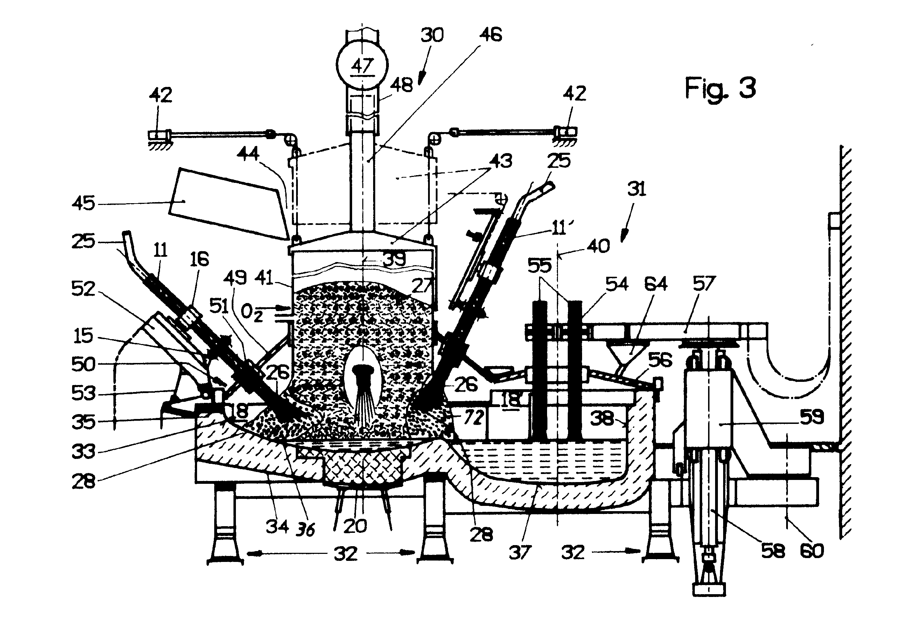

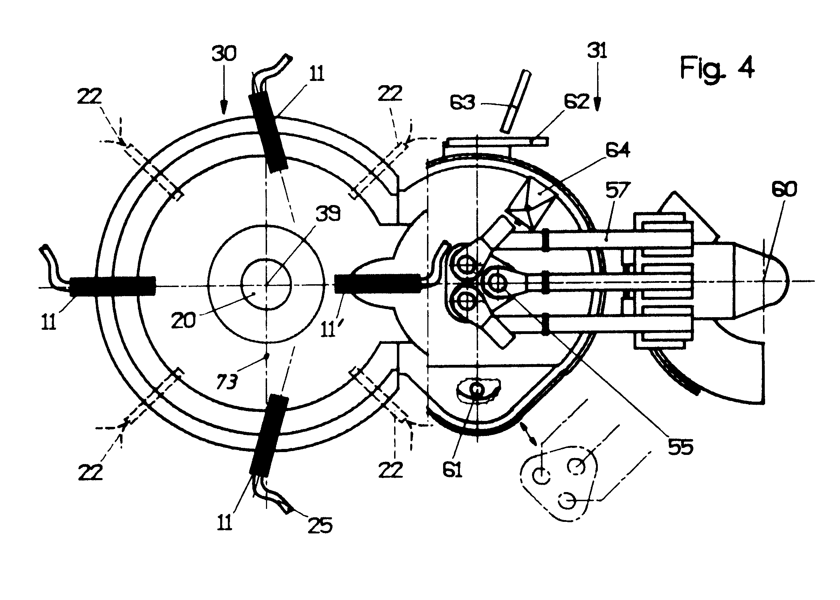

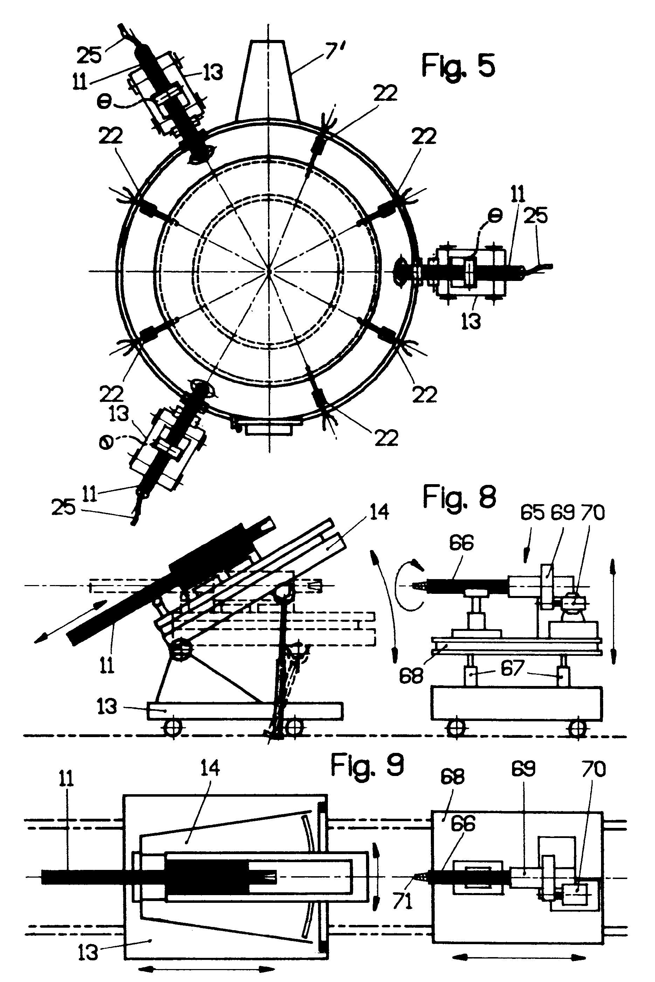

Die Erfindung ist nachfolgend anhand mehrerer in der Zeichnung dargestellter Ausführungsbeispiele näher erläutert, wobei Fig. 1a einen Vertikalschnitt durch einen Elektroofen und Fig. 2a eine Ansicht des Elektroofens von oben gemäß einer ersten und zweiten Ausführungsform eines Gleichstromofens darstellen. Die Fig. 1 b und 2b zeigen eine weitere Ausführungsform mit einzelnen Erweiterungen im unteren Teil des Ofengefäßes im Bereich der seitlich angeordneten Elektroden. Die Fig. 3 und 4 zeigen in zu Fig. 1a und 2a analoger Darstellung eine dritte Ausführungsform eines Gleichstrom-Elektroofens. In den Fig. 5, 6 und 7 sind erfindungsgemäße Drehstrom- öfen in zu den Fig. 2a und 3 bis 4 analoger Darstellung veranschaulicht. Die Fig. 8 und 9 zeigen eine für den erfindungsgemäßen Elektro-Lichtbogenofen besonders vorteilhafte Elektroden-Annippelvorrichtung in Auf- und Grundriß.

Gemäß der in den Fig. 1a und 2a dargestellten Ausführungsform weist ein Ofengefäß 1 eines Gleichstrom-Elektroofens einen muldenförmig vertieften Boden 2, der mit Feuerfestmaterial 3 ausgekleidet ist, auf. Oberhalb des Bodens 2 ist ein Schacht 4, der von einem wassergekühlten bzw. feuerfest ausgekleideten Metallmantel 5 gebildet ist, vorgesehen, der mit einem vorzugsweise durch Schwenken, aber such durch Abheben entfernbaren wassergekühlten Deckel 6 geschlossen ist.

Wie aus Fig. 2a ersichtlich ist, weist der Boden 2 einen vorzugsweise kreisförmigen Grundriß auf. An einer Seite des kippbaren Elektroofens ist ein erkerartiger Vorsprung 7 mit einer Abstichöffnung vorgesehen. Das Ofengefäß 1 könnte auch einen exzentrisch angeordneten Bodenabstich aufweisen. Der Schacht 4 erstreckt sich vom Boden 2 zunächst über eine geringe Höhe mit einem unteren zylindrischen Teil 8, dessen Durchmesser dem des Bodens 2 entspricht, verjüngt sich dann mit einem Kegelstumpfteil 9 und weist oberhalb des Kegelstumpfteiles 9 wiederum einen oberen zylindrischen Teil 10 mit gegenüber dem Bodendurchmesser verringertem Durchmesser auf.

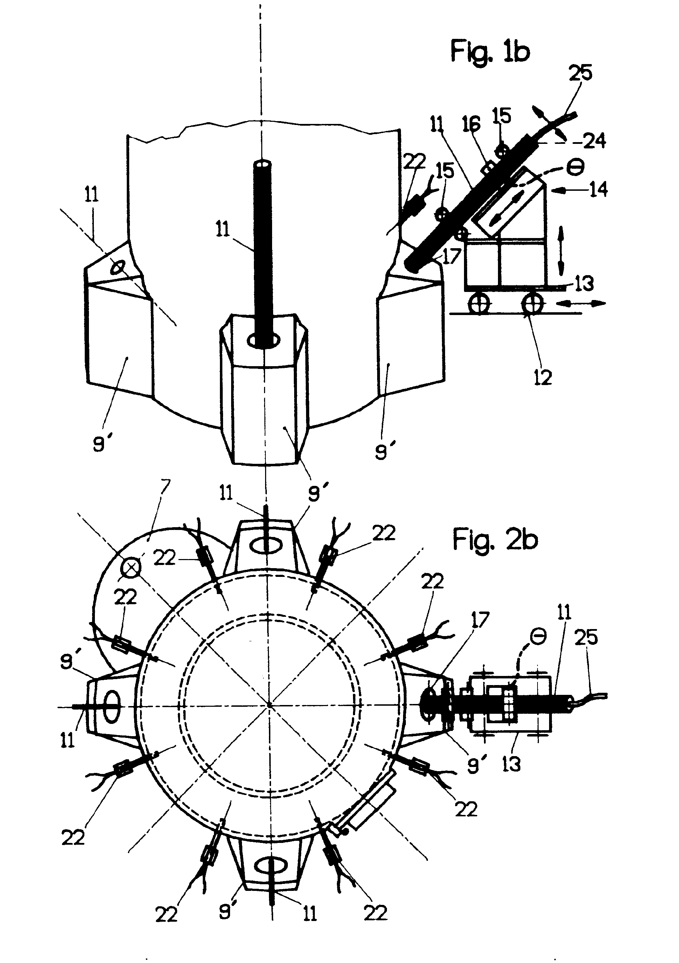

Nach einer weiteren Ausführungsform (Fig. 1b und 2b) weist der Schacht 4 von oben nach unten durchgehend ein- und denselben Durchmesser (abgesehen von einer eventuellen Konizität) auf und ist im Bereich der seitlich angeordneten Graphitelektroden mit einzelnen Erweiterungen 9' zur Einführung der Graphitelektroden 11 in den Schmelzraum ausgestattet.

Die in Umfangsrichtung des Unterteiles 8 des Elektro-Lichtbogenofens sich erstreckende Breite der Erweiterungen 9' beträgt das 3- bis 7-Fache des Elektrodendurchessers, so daß die Erweiterungen 9' die Graphitelektroden 11 - so weit diese in das Ofeninnere ragen - mit einem Freiraum umgebende Elektrodenkammern bilden.

Dadurch ist eine besser definierte Gasströmung durch die Schrottsäule, ein verbesserter Schutz der ELektroden vor einstürzendem Schrott und eine Möglichkeit gegeben, bestehende Elektro-Lichtbogenöfen mit senkrechten Graphitelektroden auf solche mit seitlich angeordneten umzubauen.

Peripher um den Ofen ist eine Mehrzahl von Gleichstromelektroden 11 aus Graphit angeordnet. Gemäß dem dargestellten Ausführungsbeispiel sind vier Graphitelektroden 11 im 90°-Abstand vorgesehen. Die Graphitelektroden 11 sind auf einer das Ofengefäß 1 umgebenden Arbeitsplattform 12 mittels auf dieser Plattform 12 verfahrbarer Wagen 13 gelagert. Jeder dieser Wagen 13 weist eine heb- und senkbare sowie um eine etwa horizontale und eine etwa vertikale Achse schwenkbare Elektrodenstützeinrichtung 14 auf, die mit die Graphitelektrode 11 stützenden Rollen 15 und mit einer Elektrodenklemmeinrichtung 16 ausgestattet ist. Jede Graphitelektrode ist auf den Rollen 15 direkt geführt und wird durch einen Hydraulikzylinder, der entweder direkt an der Elektrodenklemmeinrichtung oder an einer separaten Einrichtung angreift, vor- und zurückbewegt, wobei die Bewegung über eine Elektrodenregelung geregelt wird. Zur Durchführung der Schwenkbewegungen sowie des Längsverschubs der Graphitelektroden dienen vorzugsweise hydraulische Einrichtungen, die jedoch in der Zeichnung nicht näher dargestellt sind.

Die Graphitelektroden 11 ragen durch Öffnungen 17 des Kegelstumpfteiles 9 oder der Erweiterungen 9a in den unteren Teil des Ofeninnenraumes 18, wobei sich die Neigung der Graphitelektroden 11 und die radiale Entfernung von der Mittelachse 19 des Ofengefäßes 1 entsprechend den Betriebsbedingungen, d.h. der Menge des chargierten Gutes, dem Aufschmelzzustand, bzw. der Höhe des Schmelzen badspiegels beim Überhitzen der Schmelze, einstellen lassen. Im Boden 2 des Ofengefäßes 1 ist zentral eine einzige Bodenanode 20 vorgesehen, gegen die die radialsymmetrisch angeordneten Graphitelektroden 11 gerichtet sind. Sämtliche Graphitelektroden 11 liegen mit ihren Spitzen 21 etwa in einem Niveau und im Normalbetrieb außerhalb des Durchmessers des oberen Teiles 10, es sei denn, der Aufschmelzzustand des Chargiergutes läßt ein weiteres Eindringen der Graphitelektroden 11 in den Ofeninnenraum 18 zu.

In mehreren Niveaus oberhalb des Niveaus der Elektrodenspitzen 21 sind Gas-Sauerstoff-Brennerlanzen 22 vorgesehen, die durch Öffnungen 23 des oberen zylindrischen Teiles 10 in den Ofeninnenraum 18 einsetzbar sind. Wie aus Fig. 2a zu erkennen ist, sind vorzugsweise jeweils zwei solcher Gas-Sauerstoff-Brennerlanzen 22 zwischen zwei benachbarten Graphitelektroden 11 angeordnet.

Die Graphitelektroden 11 sind vorzugsweise als Hohlelektroden mit einem zentrisch durchgehenden Hohlraum 24 ausgeführt. Dieser Hohlraum 24 ist an eine Leitung 25 angeschlossen, durch die organische Substanzen, vorzugsweise Erdgas und/oder feste und/oder flüssige Kohlenwasserstoffe, und/oder metall- und/oder metalloxidhältige Stäube eingeleitet werden können.

Die gesamte elektrische Leistung wird im Gegensatz zu herkömmlichen Gleichstromöfen nicht durch eine einzige, sehr dicke vertikale Graphitelektrode zentral, sondern durch vier oder eine Mehrzahl von Graphitelektroden 11 kleineren Durchmessers an vier radial-symmetrischen Stellen in den Gleichstrom-Lichtbogenofen eingebracht. Dadurch wird das Leistungsspektrum so weit nach oben verschoben, daß eine Leistungsbegrenzung des Gleichstrom-Lichtbogenofens durch die Strombelastbarkeit der Elektroden nicht mehr gegeben ist. Der (die) Elektrodentragarm(e) und der (die) Hubmast(e) entfallen.

Zum Kippen des Elektroofens beim Abstich, wenn die versorgenden Hochstromseile, die erfindungsgemäß wegen des kleineren zu übertragenden Stromes pro Elektrode dünner ausgeführt sein können, bezüglich ihrer Länge und Verwindung bei herkömmlichen Elektroöfen mit zentraler, durch den Deckel ragender Graphitelektrode besonders beanspruchtwürden, können die Graphitelektroden 11 auf der Arbeitsbühne 12 zurückgefahren werden und erlauben so kurze, mechanisch sehr gering beanspruchte Hochstromseile. Dieser Vorteil gegenüber dem konventionellen Gleichstromofen wird noch verstärkt durch die Tatsache, daß erfindungsgemäß beim Deckelschwenken die Hochstromseile unbeteiligt sind.

Das Elektrodennachsetzen erfolgt an jeder der vier Graphitelektroden 11 einzeln und unabhängig, ohne daß die anderen Graphitelektroden 11 ihren Betrieb unterbrechen müßten. Dadurch wird die Verfügbarkeit des Elektroofens gegenüber dem herkömmlichen Gleichstrom-Lichtbogenofen mit einer einzigen zentralen Graphitelektrode wesentlich erhöht, bei dem zum Elektrodenwechsel oder -Nachsetzen der Betrieb unterbrochen werden muß.

Werden durch die hohlen Graphitelektroden 11 Erdgas oder andere feste, flüssige oder gasförmige organische Stoffe eingeleitet, bewirkt dies einen Kühleffekt an den Elektrodenspitzen 21. Das Erdgas z.B. wird beim Austritt aus den Graphitelektroden 11 durch die Lichtbögen 26 in die Komponenten C und H₂ zerlegt, die bei den hohen Temperaturen im Lichtbogen 26 beim Schmelzvorgang mit Sauerstoff nicht verbrennen können. Bei diesem Zerlegungsvorgang wird Energie verbraucht. Es ist zweckmäßig, das aus der CH₄-Zerlegung im Ofenraum entstehende Gasgemisch CO + H₂ mit den Gas-Sauerstoff-Brennerlanzen 22 zu C0₂ und H₂0 nachzuverbrennen. Die dabei entstehende Wärme wird hierbei dem noch kalten Schrott 27 im Ofenraum vorseinem Einschmelzen zugeführt.

Durch die schrägen Graphitelektroden 11 mit einem schrägen Lichtbogen 26 werden Kavernen 28 in den Schrott geschmolzen, worauf dieser nachstürzt, ohne die im unteren Teil 8 oder in den Erweiterungen 9a geschützt angeordneten Graphitelektroden zu treffen und zu beschädigen. Die heißen Gase aus dem Einschmelzvorgang, die beim konventionellen Gleichstrom-Lichtbogenofen mit vertikaler Graphitelektrode im ausgeschmolzenen Krater ohne Widerstand direkt nach oben streichen und abgezogen werden, steigen beim erfindungsgemäßen Elektroofen mit mehreren schrägen Graphitelektroden durch den über den Kavernen lagernden Schrott auf und wärmen diesen vor.

Dazu kommt noch die im Ofenraum stattfindende Schrottvorwärmung durch die oben beschriebene Nachverbrennung. Dies geschieht so lange, bis der Schrott 27 zu einem flüssigen Bad eingeschmolzen ist und die Lichtbögen 26 auf das flüssige Bad brennen und dieses aufheizen bzw. überhitzen.

Nach Fertigstellung der Schmelze werden die Graphitelektroden aus dem Ofeninnenraum 18 zurückgefahren und der Elektro-Lichtbogenofen zum Abstich gekippt. Nach dem Abstich wird der Elektro-Lichtbogenofen zurückgekippt, der Deckel 6 geöffnet, Schrott 27 chargiert und der Deckel 6 wieder geschlossen. Das Chargieren des Schrottes kann auch durch seitliche Klappen im oberen zylindrischen Teil 10 erfolgen, die in den Figuren nicht dargestellt sind. Nach dem Einfahren der Graphitelektroden 11 durch die Seite kann wieder mit dem Schmelzen begonnen werden.

Die durch den erfindungsgemäßen Gleichstrom-Lichtbogenofen erzielbaren Vorteile lassen sich wie folgt zusammenfassen:
- Gleichstrom-Lichtbogenöfen mit höchsten Leistungen möglich, da die Leistung auf mehrere Graphitelektroden 11 aufgeteilt und keine Beschränkung durch Elektrodendurchmesser gegeben ist (> 150 t/h). Bei herkömmlichen Gleichstrom-Lichtbogenöfen mit zentraler Graphitelektrode ist die Leistung wegen der Elektrodendimension der einzigen Graphitelektrode beschränkt (< 100 t/h).
- Wesentliche Erhöhung der Verfügbarkeit. Bei Störungen (z.B. Elektrodenbruch, Elektrodennachsetzen usw.) an einer der Graphitelektroden 11 ist ein Weiterbetrieb des Elektroofens möglich, während der Ein-Elektroden-Lichtbogenofen eine Betriebsunterbrechung erfährt. Der Elektroofen kann auch höher gebaut werden, z.B. als Schachtofen ausgebildet sein, wie dies in Fig. 1a mit strichlierten Linien dargestellt ist. Dadurch kann der gesamte Schrott 27 in einem einzigen Vorgang mit Korb oder Schurre oder in mehreren Portionen oben zugegeben werden, während unten der Schmelzvorgang ununterbrochen weitergeht. Dies ergibt eine Produktionserhöhung um ca. 10 %. Bei einer Ausbildung als Schachtofen kann eine seitliche Chargieröffnung zum kontinuierlichen Chargieren vorgesehen werden (zweckmäßig mit Schleuse zur Verhinderung eines Staubaustrittes), so daß ein Deckelhub- und Deckelschwenkwerk entfallen kann.
- Vereinfachung und Verbilligung der Einrichtung um ca. 20 % durch Wegfall von Elektrodentragarm, Elektrodenhubmast, Mastführungen und wesentliche Verkleinerungen bei Trafos, Elektrodenbewegungshydraulik usw. - Daher
- Bedeutende Instandhaltungsvorteile
- Besserer Energieeintrag ins Schmelzgut durch optimale Verteilung des Energieangebotes im Ofenraum, bessere Regelbarkeit durch geringere bewegte Massen am Elektrodensystem, bessere Schrottvorwärmung im Ofenraum durch heiße Abgase aus der durch die schrägen Graphitelektroden 11 ausgeschmolzenen Kavernen 26. Verbesserung der Schrottvorwärmung durch Nachverbrennung von CO aus mitchargierter Kohle oder von CO + H₂ aus Erdgas, das durch die Hohlelektrode eingeblasen wird . - Daher
- Energieeinsparung ca. 50 kWh/t = ca. 15 % bzw. Leistungserhöhung um ca. 10 %.
- Weitere Elektordeneinsparung um ca. 25 % durch schräge Elektrodenanordnung: glühende Elektrodenlänge kürzer, heiße Abgase streichen nicht entlang der Graphitelektrode, daher geringerer seitlicher Abbrand.
- Keine Elektroden-Sondergrößen nötig, sondern kleine Elektrodendurchmesser möglich (etwa 200 bis 450 mm Durchmesser), deren kleine Dimension noch durch die höhere spezifische Leitfähigkeit (A/cm²) bei kleinen Durchmessern begünstigt wird.
- Vermeidung der Ablenkung des Lichtbogens durch Magnetfelder bei starkem Gleichstrom-Lichtbogenofen, da durch die Aufteilung auf mehrere Graphitelektroden viel kleinere Einzelströme und damit schwächere Magnetfelder auftreten.

Gemäß der in den Fig. 3 und 4 dargestellten Ausführungsform weist die Anlage ein als Schachtofen 30 ausgebildetes Ofengefäß und einen vom Schachtofen 30 getrennten, eigenständigen, aber mit ihm zusammenhängenden Elektro-Herdofen 31 auf und ist über Kippwiegen 32 gegenüber dem Fundament abgestützt.

Der Boden 33 der Anlage ist von einem Blechpanzer 34 gebildet, der innen mit einer feuerfesten Auskleidung 35 versehen ist. Er weist beim Schachtofen 30 eine kreisförmige oder ovale muldenförmige Bodenvertiefung 36 auf, die von der Boden-Vertiefung 37, die dem Elektro-Herdofen 31 zugeordnet ist, durch ein Überlaufwehr 72 getrennt ist. Zur Trockenlegung der Bodenvertiefung 36 zwecks Überprüfung, Reparaturoderzum Wechseln der Bodenanode 20 ist im Boden 33 ein Abstichloch 73 vorgesehen, welches exzentrisch angeordnet ist. Die feuerfeste Auskleidung ist im Bereich des Elektro-Herdofens 31 höher gezogen und bildet mit dem Boden 37 zusammenhängende Seitenwände 38, die aber auch als wassergekühlte Wände ausgeführt sein können.

Im Grundriß sind, wie aus Fig. 4 ersichtlich, sowohl der Schachtofen 30 als auch der Elektro-Herdofen 31 vorzugsweise kreisförmig ausgebildet; ihre Böden 36, 37 berühren einander etwa tangierend. Beide Ofeninnenräume 18 und 18' stehen an der Berührungsstelle miteinander in Verbindung, wobei die Bodenvertiefungen 36 und 37 an der Berührungsstelle durch ein Überlaufwehr 72 getrennt sind. Der Herdofenteil 31 kann eine ganze Charge aufnehmen, ohne daß die Höhe des Überlaufwehres 72 erreicht wird.

Wie aus den Fig. 3 und 4 ersichtlich, ist die Anlage senkrecht zu einer das Zentrum 39 des Schachtofens 30 mit dem Zentrum 40 des Elektro-Herdofens 31 verbindenden horizontalen Achse kippbar.

Der Schachtofen 30 weist einen zylindrischen, im Durchmesser kleiner als der Durchmesser seines Bodens gehaltenen Schachtteil 41 auf, der von einem Metallmantel gebildet ist. Am oberen Ende des Schachtteiles 41 ist eine mittels Druckmittelzylinder 42 heb- und senkbare Haube 43 angeordnet, die an einer Seite eine Ausnehmung 44 aufweist, so daß bei gehobener, in Fig. 3 strichpunktiert dargestellter Haube 43 eine Chargieröffnung zum Chargieren von Schrott 27 mittels einer Schrottschurre 45 freigegeben ist. Das Chargieren des Schrottes kann auch durch seitliche Klappen im zylindrischen Schachtteil 41 erfolgen, die in den Figuren nicht dargestellt sind. Es kann auch eine Schleuse zur Abgaserfassung beim Chargieren dazwischengeschaltet sein. Im Zentrum der Haube 44 ist ein Abgasabzugsrohr46 vorgesehen, welches in ein konzentrisches, im Durchmesser größeres ortsfestes, an einen Saugzug 47 angeschlossenes Abzugsrohr 48 einmündet.

Der Schachtofen 30 ist an seinem unteren Ende mit einem nach unten zu divergierenden, von einem wassergekühlten Mantel 49 gebildeten Unterteil 50 versehen. Dieser divergierende Unterteil 50 weist am kegelstumpfförmigen Mantel 49 liegende Öffnungen 51 auf, durch die schräg gegen das Bodenzentrum gerichtete Graphitelektroden 11 in das Innere des Schachtofens 30 ragen. Die Graphitelektroden 11 sind an Konsolen 52 gelagert und axial in Richtung zum Boden 33 hin bzw. entgegengesetzt verschiebbar sowie mittels einer Schwenkeinrichtung 53 verschwenkbar. So kann beim dargestellten Ausführungsbeispiel die Neigung der Elektrodenachse gegenüber der Horizontalen zwischen 20 und 80° verstellt werden. Im Zentrum 39 des Schachtofens 30 ist eine Bodenanode 20 angeordnet.

Am Übergang zwischen Schachtofen 30 und Elektro-Herdofen 31 ist eine weitere Graphitelektrode 11' vorgesehen, die steiler als die übrigen am Mantel des divergierenden Unterteiles 50 schwenkbarvorgesehen Graphitelektroden 11 angeordnet ist. Diese Graphitelektrode 11' ist vorzugsweise lediglich längsverschiebbar, nicht jedoch schwenkbar gelagert. Ihre Neigung gegenüber der Horizontalen beträgt zwischen 50 und 80°, vorzugsweise 70°.

Der Elektro-Herdofen 31 ist mit einer elektrischen Beheizungseinrichtung 54, die beim dargestellten Ausführungsbeispiel als Drehstrom-Lichtbogenbeheizung, deren Graphitelektroden 55 durch den Deckel 56 geführt sind, ausgebildet ist, ausgestattet. Es ist jedoch auch eine Gleichstrom-Lichtbogenbeheizung möglich. Anstelle der Lichtbogenbeheizung könnte auch eine induktive Beheizungseinrichtung vorgesehen sein. Die Graphitelektroden 55 sind an einem bis seitlich neben den Ofen ragenden Elektrodenhalter 57, der mittels einer Hubeinrichtung 58 an einer Säule 59 gelagert ist, heb- und senkbar und um eine Schwenkachse 60 seitlich verschwenkbar. Auch eine Beheizung durch seitlich schräg in den Elektro-herdofen ragende Elektroden ist möglich.

Der Elektro-Herdofen weist vorzugsweise einen Bodenabstich 61 auf, der exzentrisch zum Zentrum 40 des Elektro-Herdofens 31 angeordnet ist. In einer Seitenwand 38 ist eine im Abstand von der Boden- Vertiefung vorgesehene Arbeitstür 62 zum Abschlacken angeordnet. Durch diese Arbeitstür 62 ist gegebenenfalls eine Sauerstoffblaslanze 63 zum Einblasen von Frischsauerstoff in den Elektro-Herdofen 31 einführbar. Zur Aufgabe von Legierungselementen ist im wassergekühlten Deckel 56 des Elektro-Herdofens 31 ein Trichter 64 vorgesehen.

Gemäß der in den Fig. 3 und 4 dargestellten Ausführungsform sind zweckmäßig die Graphitelektroden ebenfalls als Hohlelektroden ausgebildet und an eine Gaszuführungsleitung zur Zuführung von Erdgas angeschlossen. Weiters sind zwecks effizienter Vorwärmung des Schrotts in mehreren Niveaus oberhalb der Elektrodenspitzen im Schachtofen 30 ebenfalls Gas-Sauerstoff-Brennerlanzen 22 zur Nachverbrennung vorgesehen.

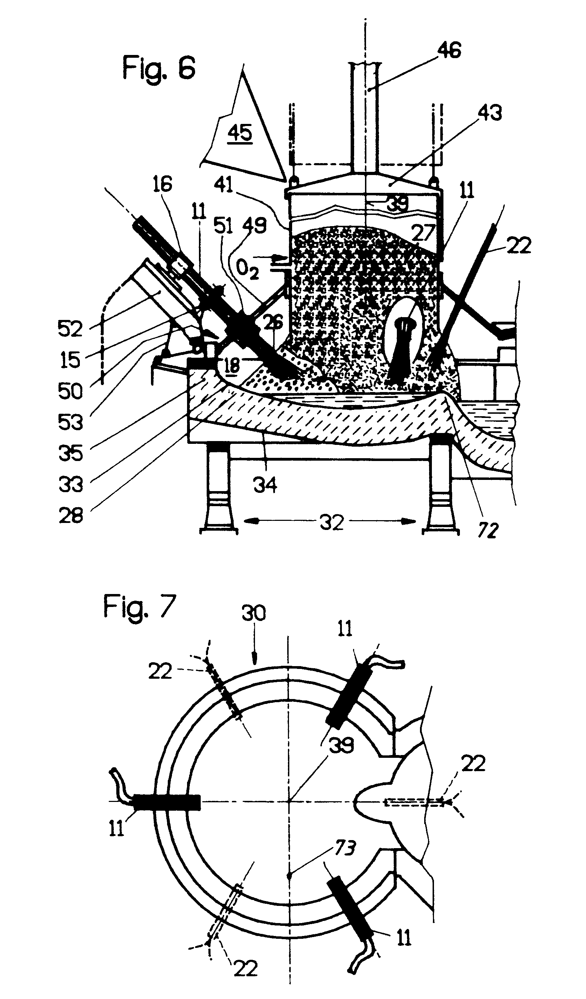

In den Fig. 5 bis 7 sind in zu den Fig. 2a und 3 bis 4 analoger Darstellung Elektroöfen, die als Drehstromöfen ausgebildet sind, veranschaulicht. Fig. 5 zeigt einen Elektroofen der in Fig. 2a dargestellten Art (jedoch mit Schnauzenabstich 7'), die Fig. 6 und 7 in der Art nach den Fig. 3 und 4. Diese Öfen weisen jeweils drei (oder ein Vielfaches von drei) in etwa gleichförmig um den Umfang verteilte Graphitelektroden auf, die ebenfalls von der Seite her und nicht wie bei herkömmlichen Elektro-Lichtbogenöfen von oben durch die Decke in den Ofeninnenraum ragen. Fürdie Drehstrom-Lichtbogenöfen ergeben sich in etwa dieselben Vorteile, wie sie für den erfindungsgemäßen Gleichstrom-Lichtbogenofen angeführt sind.

Die Fig. 8 und 9 zeigen eine in Richtung der Elektrodenstützeinrichtung 14 auf der Arbeitsplattform 12 verfahrbare Elektroden-Annippelvorrichtung 65, die dazu dient, an einen Graphitelektrodenstrang ein neues Graphitelektrodenstück 66 anzuschließen bzw. zu fixieren, u.zw. rein maschinell, vorzugsweise automatisch.

Zu diesem Zweck wird die Elektrodenstützeinrichtung 14 nach einem Zurückfahren des Wagens 13 in die Horizontale (vgl. die strichliert dargestellte Position) gekippt, so daß die Graphitelektrode 11 mit dem Graphitelektrodenstück 66, das auf der Elektroden-Annippelvorrichtung 65 horizontal gelagert ist, fluchtet. Die Elektroden-Annippelvorrichtung 65 weist eine horizontale, mittels einer Hubvorrichtung 67 heb- und senkbare Plattform 68 auf, um das neue Elektrodenstück 66 auf die Höhe der horizontal gerichteten Elektrode 11 zu bringen.

Das neue Elektrodenstück 66 ist in einer Klemmvorrichtung 69 festgeklemmt, die auf der Plattform 68 drehbar gelagert ist und mittels eines Motors 70 in Umdrehung versetzt werden kann. Durch Ansetzen des neuen Elektrodenstückes 66 mit seinem konisch geformten und mit einem Gewinde versehenen Nippel 71 an das gegengleich geformte Ende mit Innengewinde der Elektrode 11 und Aufschrauben des Elektrodenstückes 66 gelingt es, eine stabile Verbindung ohne Verwendung eines Kranes und ohne Manipulationen zu erfordern, zu schaffen.

## Patentansprüche

1. Elektro-Lichtbogenofen zur Herstellung von Stahl durch Einschmelzen von Schrott (27), insbesondere Eisenschrott, und/oder Eisenschwamm und/oder Roheisen sowie Zuschlagstoffen, in einem Ofengefäß (1; 30), in das mindestens eine in ihrer Längsrichtung verbringbare Graphitelektrode (11) ragt, wobei ein Lichtbogen (26) zwischen der Graphitelektrode (11) und dem Chargiergut (27) gezündet ist, dadurch gekennzeichnet,
- daß die Graphitelektrode (11) in einen Unterteil (8) des Ofengefäßes (1; 30) von der Seite her hineinragt und
- daß der Unterteil (8) im Bereich der Graphitelektrode (11) eine radial gegenüber dem Oberteil (10) nach außen vorspringende Erweiterung (8, 9; 9') aufweist.

2. Elektro-Lichtbogenofen nach Anspruch 1, dadurch gekennzeichnet, daß sich die Erweiterung (8, 9) ringförmig um den Oberteil erstreckt.

3. Elektro-Lichtbogenofen nach Anspruch 1 oder 2, dadurch gekennzeichnet, daß sich die Erweiterung (9') nur im Bereich der Einmündung der Graphitelektrode (11) in den Unterteil erstreckt (Fig. 1 b, 2b).

4. Elektro-Lichtbogenofen nach einem oder mehreren der Ansprüche 1 bis 3, dadurch gekennzeichnet, daß die Graphitelektroden (11) vorzugsweise schräg abwärts gegen den Boden (2; 33) des Ofengefäßes (1; 30) gerichtet sind.

5. Elektro-Lichtbogenofen nach einem oder mehreren der Ansprüche 1 bis 4, dadurch gekennzeichnet, daß er als Drehstromofen mit drei bzw. einer Mehrzahl von drei Graphitelektroden (11) ausgebildet ist (Fig. 5 bis 7).

6. Elektro-Lichtbogenofen nach einem oder mehreren der Ansprüche 1 bis 4, dadurch gekennzeichnet, daß er als Gleichstromofen ausgebildet ist, der mit einer Mehrzahl von Graphitelektroden (11) ausgestattet ist (Fig. 1a bis 4).

7. Elektro-Lichtbogenofen nach Anspruch 6, dadurch gekennzeichnet, daß die Graphitelektroden (11) kathodisch geschaltet sind und im Boden des Ofengefäßes eine Bodenanode (20) vorgesehen ist.

8. Elektro-Lichtbogenofen nach Anspruch 6, dadurch gekennzeichnet, daß der Elektro-Lichtbogenofen als Gleichstromofen ausgebildet ist, der mindestens eine kathodisch und mindestens eine anodisch geschaltete Graphitelektrode (11) aufweist.

9. Elektro-Lichtbogenofen nach Anspruch 6, 7 oder 8, dadurch gekennzeichnet, daß die Graphitelektroden (11) voneinander unabhängig elektrisch geschaltet sind.

10. Elektro-Lichtbogenofen nach einem oder mehreren der Ansprüche 1 bis 9, dadurch gekennzeichnet, daß die Graphitelektroden (11) etwa in einem Niveau und etwa radialsymmetrisch zur Vertikalachse (19; 39) des Ofengefäßes (1; 30) angeordnet sind.

11. Elektro-Lichtbogenofen nach einem oder mehreren der Ansprüche 1 bis 10, dadurch gekennzeichnet, daß in mindestens einem Niveau oberhalb des Niveaus, in dem die Graphitelektroden (11) angeordnet sind, Gas-Sauerstoff-Brennerlanzen (22) zum Eintrag fossiler Energie in das Ofengefäß (1) ragen und die Gas-Sauerstoff-Brennerlanzen (22) von der Seite her in das Ofengefäß (1) ragen.

12. Elektro-Lichtbogenofen nach Anspruch 11, dadurch gekennzeichnet, daß die Gas-Sauerstoff-Brennerlanzen (22) radialsymmetrisch zur Vertikalachse (19) des Ofengefäßes (1) und bei Sicht in Richtung dieser Vertikalachse (19) zwischen den Graphitelektroden (11) liegend angeordnet sind.

13. Elektro-Lichtbogenofen nach einem oder mehreren der Ansprüche 1 bis 12, dadurch gekennzeichnet, daß die Graphitelektroden in schräger Richtung auf einer Elektrodenstützeinrichtung (14) angeordnet sind, an der sie axial verschiebbar sowie um eine etwa vertikale und eine etwa horizontale Achse schwenkbar gelagert sind.

14. Elektro-Lichtbogenofen nach Anspruch 13, dadurch gekennzeichnet, daß die Graphitelektrode mittels Stützrollen (15) in Richtung ihrer Längsachse an der Elektrodenstützeinrichtung (14) bewegbar abgestützt ist.

15. Elektro-Lichtbogenofen nach Anspruch 13 oder 14, dadurch gekennzeichnet, daß die Elektrodenbewegung hydraulisch erfolgt.

16. Elektro-Lichtbogenofen nach einem oder mehreren der Ansprüche 13 bis 15, dadurch gekennzeichnet, daßdie Elektrodenstützeinrichtung (14) in zum Ofengefäß (1; 30) radialer Richtung zum Ofengefäß hin und entgegengesetzt fahrbar ist.

17. Elektro-Lichtbogenofen nach einem oder mehreren der Ansprüche 1 bis 16, dadurch gekennzeichnet, daß eine Elektroden-Annippelvorrichtung (65) vorgesehen ist, auf der ein Elektrodenstück (66) mittels einer Klemmvorrichtung (69) drehbar gelagert ist, wobei die Elektrodenstützeinrichtung und die Klemmeinrichtung fluchtend gegeneinander bewegbar sind.

18. Elektro-Lichtbogenofen nach einem oder mehreren der Ansprüche 1 bis 17, dadurch gekennzeichnet, daß die Graphitelektroden (11) als Hohlelektroden ausgebildet sind, deren Hohlraum (24) an eine Gaszuführungsleitung sowie gegebenenfalls an eine Feststoffzuführungsleitung zum Einbringen metall-und/oder metalloxidhältiger Stäube und/oder organischer Substanzen (25) anschließbar ist.

19. Anlage nach einem oder mehreren der Ansprüche 1 bis 18, dadurch gekennzeichnet, daß das Ofengefäß (1; 30, 31) kippbar gelagert ist.

20. Anlage nach einem oder mehreren der Ansprüche 1 bis 19, dadurch gekennzeichnet, daß das Ofengefäß (1) mit einem exzentrischen Bodenabstich oder einem Schnauzenabstich ausgerüstet ist.

21. Anlage nach einem oder mehreren der Ansprüche 1 bis 20, dadurch gekennzeichnet, daß der Elektroofen (1; 30) als Schachtofen ausgebildet ist, wobei der Schacht am oberen Ende mit einer oder mehreren verschließbaren Seiten-Chargieröffnung(en) versehen ist.

22. Anlage nach Anspruch 21, dadurch gekennzeichnet, daß der Schachtofen (30) einen sich nach oben verjüngenden Schacht aufweist (Fig. 3; 6).

23. Anlage nach Anspruch 21 oder 22, dadurch gekennzeichnet, daß unmittelbar neben dem Schachtofen (30) ein Elektro-Herdofen (31) angeordnet ist, in den die sich im Schachtofen (30) bildende Schmelze über ein Überlaufwehr (72) unmittelbar überführbar ist.

24. Anlage nach Anspruch 23, dadurch gekennzeichnet, daß der Boden des Schachtofens (30) eine kreisförmige oder ovale, muldenförmige Boden- vertiefung (36) aufweist, die von der Bodenvertiefung (37) des Elektro-Herdofens (31) durch das Überlaufwehr (72) getrennt ist.

25. Anlage nach Anspruch 23 oder 24, dadurch gekennzeichnet, daß die Böden des Schachtofens (30) und des Elektro-Herdofens (31) einander in etwa tangieren.

26. Anlage nach einem oder mehreren der Ansprüche 23 bis 25, dadurch gekennzeichnet, daß der Boden des Elektro-Herdofens (31) gegenüber dem Boden (36) des Schachtofens (30) wannenförmig vertieft ausgebildet ist.

27. Anlage nach einem oder mehreren der Ansprüche 21 bis 26, dadurch gekennzeichnet, daß der Schachtofen (30) am oberen Ende mit einer Gasabsaugung (46, 47) versehen ist.

28. Verfahren zur Herstellung von Stahl aus Schrott und/oder Eisenschwamm und/oder Roheisen unter Verwendung eines Elektro-Lichtbogenofens nach den Ansprüchen 21 bis 27, dadurch gekennzeichnet, daß im Schachtofen (30) Chargiergut (27) kontinuierlich eingeschmolzen wird und daß die Schmelze im Elektro-Herdofen (31) gesammelt sowie chargenweise zu Stahl verarbeitet, aufgeheizt und abgestochen wird.

29. Verfahren zur Herstellung von Stahl aus Schrott (27) unter Verwendung eines Elektroofens nach den Ansprüchen 1 und 18, dadurch gekennzeichnet, daß nach Chargieren des Schrotts (27) und Zünden der Lichtbögen (26) durch die Hohlräume (24) der Graphitelektroden (11) organische Substanzen dem Lichtbogen (26) zugeführt und dort zerlegt werden.

30. Verfahren nach Anspruch 29, dadurch gekennzeichnet, daß als organische Substanzen Kohlenwasserstoffe in fester, flüssiger und/oder gasförmiger Form in den Lichtbogen eingebracht, dort unter Kühlung der Elektrodenspitze (21) zerlegt und die Zerlegungsprodukte in weiterer Folge verbrannt werden.

31. Verfahren nach Anspruch 30, dadurch gekennzeichnet, daß als Kohlenwasserstoffe in fester Form Kunststoffabfälle eingebracht werden.

32. Verfahren nach Anspruch 31, dadurch gekennzeichnet, daß die Kunststoffabfälle zusammen mit einem Trägergas pneumatisch in den Lichtbogen gefördert werden.

33. Verfahren nach Anspruch 30, dadurch gekennzeichnet, daß als flüssige Kohlenwasserstoffe Altöle eingebracht werden.

34. Verfahren nach Anspruch 30, dadurch gekennzeichnet, daß ein durch Zuführung von Erdgas im Lichtbogen (26) enstehendes Gasgemisch (CO + H₂) aufsteigen gelassen wird und in einem Niveau oberhalb der durch den Lichtbogen (26) eingebrannten Kavernen (28) unter Abgabe von Wärme an den Schrott (27) nachverbrannt wird.

35. Verfahren nach Anspruch 34, dadurch gekennzeichnet, daß die Nachverbrennung des Gasgemisches (CO + H₂) mit Hilfe einer Verbrennung eines Brenngas-Sauerstoff-Gemisches durchgeführt wird.
